# EUROPÄISCHE PATENTSCHRIFT

(11) **EP 3 730 823 B1**
(45) Veröffentlichungstag und Bekanntmachung des Hinweises auf die Patenterteilung: **05.07.2023**
(21) Anmeldenummer: 19465531.2
(22) Anmeldetag: 24.04.2019
(51) Int. Cl.: F16K 5/06, F01P 1/00, F16J 15/02, F16J 15/10, F16J 15/36

(54) **DICHTELEMENT UND FLUIDVENTIL**
SEAL ELEMENT AND FLUID VALVE
ÉLÉMENT D'ÉTANCHÉITÉ ET SOUPAPE À FLUIDE

(43) Veröffentlichungstag der Anmeldung: 28.10.2020
(73) Patentinhaber: Vitesco Technologies GmbH, 93055 Regensburg (DE)
(72) Erfinder: Popa, Alexandru, 240048 Rimnicu Vilcea (RO); Plaeru, George, 300620 Timisoara (RO); Rozputniak, Dmytro, 300585 Timisoara (RO); Petrus, Cristian, 307090 Carpinis (RO)
(74) Vertreter: Vitesco Technologies

(56) Entgegenhaltungen:
- GB-A- 974 175
- KR-A- 20180 013 441
- US-A- 5 984 312
- US-A1- 2015 308 575
- US-A1- 2016 273 671
- US-A1- 2018 216 743
- US-A1- 2019 017 612

## Beschreibung

Die vorliegende Erfindung betrifft ein Fluidventil mit einer Dichtungsanordnung mit einem Dichtelement, sowie ein Kraftfahrzeug mit dem Fluidventil.

Die US 2018/0216743 A1 offenbart einen Dichtungsring, der in einem Ventil verwendet werden kann und einen Innendurchmesser aufweist, der eine Form des Dichtungsrings definiert. Die Form kann so konfiguriert sein, dass sie der Form einer Durchflussöffnung des Ventils entspricht. Bestimmte Ausführungsformen können auch eine erste Seite, die so konfiguriert ist, dass sie an einer Körperwand des Ventils anliegt, eine profilierte Fläche auf einer zweiten Seite gegenüber der ersten Seite, wobei die profilierte Fläche so konfiguriert ist, dass sie zu einem Verschlusselement passt, einen äußeren radialen Nutausschnitt auf einer Außenseite zwischen der ersten Seite und der zweiten Seite, und einen inneren radialen Nutausschnitt auf einer Innenseite zwischen der ersten Seite und der zweiten Seite umfassen, wobei der äußere radiale Nutausschnitt und der innere radiale Nutausschnitt so konfiguriert sind, dass sie sich elastisch verformen.

Weiterer Stand der Technik ist in den Druckschriften US 2016/0273671 A1, US 2019/0017612 A1 und KR 2018 0013441 A1 offenbart.

Eine Aufgabe einer Ausführung der vorliegenden Erfindung ist es, eine Abdichtung zwischen einer ersten Wandung und einer dieser in einer Axialrichtung gegenüberliegenden zweiten Wandung zu verbessern.

Diese Aufgabe wird durch ein Fluidventil mit den Merkmalen des Anspruchs 1 gelöst. Anspruch 6 stellt ein Kraftfahrzeug mit wenigstens einem hier beschriebenen Fluidventil unter Schutz. Vorteilhafte Ausführungsformen der Erfindung sind Gegenstand der Unteransprüche.

Erfindungsgemäß weist das Fluidventil, insbesondere Mehrwege- und/oder Kühlwasser-Steuer- oder-Regelventil und/oder für ein Kraftfahrzeug, wenigstens eine Dichtungsanordnung zur Abdichtung zwischen einem Gehäuse und einem darin verstellbar, insbesondere verdrehbar, angeordneten Stellglied auf, wobei die Dichtungsanordnung eine erste Wandung, eine dieser in einer Axialrichtung gegenüberliegende zweite Wandung und ein Dichtelement aufweist, wobei das Dichtelement zwischen der ersten Wandung und der zweiten Wandung abdichtet, wobei das Dichtelement einen ersten Radialflansch mit einer ersten Stirnfläche, die an der ersten Wandung anliegt, einen zweiten Radialflansch mit einer zweiten Stirnfläche, die an der zweiten Wandung anliegt, und einen Mantel aufweist, der den ersten und zweiten Radialflansch verbindet, wobei der erste Radialflansch sich vom Mantel in einer Radialrichtung quer zur Axialrichtung nach radial innen erstreckt, der zweite Radialflansch sich vom Mantel nach radial außen erstreckt, eine radial innere Oberfläche des Mantels und eine radial äußere Oberfläche des Mantels in Axialrichtung vom ersten zum zweiten Radialflansch hin jeweils wenigstens abschnittsweise nach radial innen konvergieren.

Hierdurch weisen der erste und zweite Radialflansch einander (in Axialrichtung) zugwandte Oberflächen auf, die der Stirnfläche des jeweiligen Radialflanschs axial gegenüberliegen und auf einander radial gegenüberliegenden Seiten des Mantels liegen.

Dadurch kann das Dichtelement bei Beaufschlagung des Mantels mit einer Druckdifferenz eine vorteilhafte, insbesondere selbstverstärkende, Dichtwirkung realisieren.

Erfindungsgemäß enthält das Dichtelement einen kreishohlzylinderförmigen Volumenbereich, der sich von der ersten Stirnfläche bis zu der zweiten Stirnfläche erstreckt.

Hierdurch kann eine vorteilhafte axiale Steifigkeit und/oder eine vorteilhafte (Ver)Wölbung des Mantels infolge einer axialen Kompression realisiert werden.

Zusätzlich kann in einer Ausführung durch den in Axialrichtung vom ersten zum zweiten Radialflansch hin wenigstens abschnittsweise nach radial innen konvergierenden Mantel bei axialer Kompression des Dichtelements bzw. Reduzierung eines Axialspalts zwischen erster und zweiter Wandung der erste Radialflansch nach radial innen und/oder der zweite Radialflansch nach radial außen verschoben werden und/oder der Mantel sich (ver)wölben.

Dadurch kann in einer Ausführung das Dichtelement einen vorteilhaften Steifigkeitsverlauf einer elastischen Reaktionskraft des Dichtelements infolge bzw. über eine(r) Kompression in Axialrichtung realisiert werden.

In einer Ausführung ist der erste Radialflansch ringartig, insbesondere ringförmig (ausgebildet). Zusätzlich oder alternativ ist in einer Ausführung der zweite Radialflansch ringartig, insbesondere ringförmig (ausgebildet).

Hierdurch kann in einer Ausführung die Dichtwirkung, Herstellung und/oder Montage verbessert werden.

Zusätzlich oder alternativ ist in einer Ausführung die radial innere Oberfläche wenigstens abschnittsweise kegelstumpfartig. Zusätzlich oder alternativ ist in einer Ausführung die radial äußere Oberfläche wenigstens abschnittsweise kegelstumpfartig, insbesondere kegelstumpfförmig (ausgebildet).

In einer Ausführung konvergieren die radial innere Oberfläche und radial äußere Oberfläche in Axialrichtung vom ersten zum zweiten Radialflansch hin wenigstens über 50%, insbesondere wenigstens über 75%, eines, insbesondere maximalen, minimalen oder mittleren, axialen Abstands zwischen dem ersten und zweiten Radialflansch nach radial innen, sind insbesondere über 50%, insbesondere wenigstens über 75%, eines, insbesondere maximalen, minimalen oder mittleren, axialen Abstands zwischen dem ersten und zweiten Radialflansch kegelstumpfartig bzw. -förmig (ausgebildet).

Hierdurch kann in einer Ausführung die Herstellung und/oder der Steifigkeitsverlauf und damit insbesondere die Dichtwirkung verbessert werden.

Zusätzlich oder alternativ weist in einer Ausführung der erste Radialflansch wenigstens abschnittsweise, in einer Ausführung über wenigstens 50% seiner radialen Länge, eine konstante Wandstärke auf. Zusätzlich oder alternativ weist in einer Ausführung der zweite Radialflansch wenigstens abschnittsweise, in einer Ausführung über wenigstens 50% seiner radialen Länge, eine konstante Wandstärke auf. Zusätzlich oder alternativ weist in einer Ausführung der Mantel wenigstens abschnittsweise, in einer Ausführung über wenigstens 50% seiner axialen Länge, eine konstante Wandstärke auf. Zusätzlich oder alternativ weisen in einer Ausführung der erste Radialflansch und der zweite Radialflansch und/oder der erste Radialflansch und der Mantel und/oder der zweite Radialflansch und der Mantel wenigstens abschnittsweise, in einer Ausführung über wenigstens 50% einer radialen Länge des Radialflanschs und/oder wenigstens 50% einer axialen Länge des Mantels, dieselbe Wandstärke auf. Zusätzlich oder alternativ weist das Dichtelement in einer Ausführung in wenigstens einem Axialschnitt parallel zur Axialrichtung einen Z-artigen, insbesondere Z-förmigen, Querschnitt auf.

Hierdurch kann in einer Ausführung jeweils, insbesondere in Kombination wenigstens zweier dieser Merkmale, die Herstellung und/oder der Steifigkeitsverlauf und damit insbesondere die Dichtwirkung verbessert werden.

Zusätzlich oder alternativ ist/sind in einer Ausführung der erste Radialflansch, der zweite Radialflansch und/oder der Mantel
bezüglich einer zur Axialrichtung parallelen Symmetrieachse wenigstens abschnittsweise rotationssymmetrisch.

Hierdurch kann in einer Ausführung die Herstellung und/oder der Steifigkeitsverlauf und damit insbesondere die Dichtwirkung verbessert werden.

In einer Ausführung ist das Dichtelement elastisch, in einer Weiterbildung wenigstens derart, dass es innerhalb einer, insbesondere konstruktiv bzw. formschlüssig, maximal möglichen axialen Annäherung der ersten und zweiten Wandung aneinander nur elastisch bzw. nicht plastisch verformt wird bzw. nicht reißt bzw. zerlegt. Zusätzlich oder alternativ ist das Dichtelement in einer Ausführung einstückig bzw. -teilig bzw. sind erster und zweiter Radialflansch und Mantel integral miteinander ausgebildet.

Zusätzlich oder alternativ ist das Dichtelement in einer Ausführung urgeformt.

Zusätzlich oder alternativ weist das Dichtelement in einer Ausführung wenigstens ein Elastomer, in einer Weiterbildung EPDM, auf, es kann in einer Ausführung hieraus bestehen, insbesondere urgeformt sein.

Hierdurch kann in einer Ausführung jeweils, insbesondere in Kombination wenigstens zweier dieser Merkmale, die Herstellung und/oder Dichtwirkung verbessert werden.

In einer Ausführung sind die erste und zweite Wandung wenigstens abschnittsweise parallel zueinander und/oder erstrecken sich in Radialrichtung. Zusätzlich oder alternativ sind die erste und zweite Wandung gegeneinander in Axialrichtung beweglich. Zusätzlich oder alternativ sind die erste und zweite Wandung gegeneinander quer zur Axialrichtung beweglich.

In einer Ausführung ist das Dichtelement wenigstens in einem Betriebszustand der Dichtungsanordnungen, in einer Weiterbildung (bereits) in einem montierten bzw. Montagezustand, in Axialrichtung elastisch zwischen der bzw. durch die erste(n) und zweite(n) Wandung verspannt.

Hierdurch kann in einer Ausführung die Dichtwirkung verbessert werden.

In einer Ausführung begrenzen die erste und zweite Wandung einen Ringraum axial, in dem das Dichtelement mit Spiel des ersten und/oder zweiten Radialflanschs in Radialrichtung zwischen einer radial äußeren und einer radial inneren Wand, die den Ringraum radial begrenzen, aufgenommen ist. Unter einem Begrenzen wird vorliegend insbesondere ein (Mit)Definieren verstanden.

Durch solches Radialspiel kann in einer Ausführung bei axialer Kompression bzw. Annährung der ersten und zweiten Wandung aneinander der erste Radialflansch nach radial innen und/oder der zweite Radialflansch nach radial außen verschoben werden, insbesondere durch bzw. (Ver)Wölbung des Mantels.

Dadurch kann in einer Ausführung das Dichtelement einen vorteilhaften Steifigkeitsverlauf einer elastischen Reaktionskraft des Dichtelements infolge bzw. über eine(r) Kompression in Axialrichtung realisieren.

In einer Ausführung weist die Dichtungsanordnung einen ein- oder mehrteiligen Stützring auf, der die erste oder zweite Wandung aufweist. Zusätzlich oder alternativ weist in einer Ausführung der Stützring die radial äußere oder innere Wand auf. Er kann somit insbesondere einen L-förmigen Querschnitt mit einem Ringflansch, der die erste oder zweite Wandung aufweist, und einem Axialflansch, der die radial äußere oder innere Wand aufweist, aufweisen.

Durch einen solchen Stützring kann in einer Ausführung eine vorteilhafte Abstützung und/oder Montage des Dichtelements realisiert und/oder das Dichtelement vorteilhaft geführt und/oder -schützt werden bzw. sein.

In einer Ausführung weist der Stützring, insbesondere wenigstens eine der ersten bzw. zweiten Wandung des Stützrings axial gegenüberliegende Oberfläche des Stützrings, insbesondere seines Ringflanschs, einen Reibungskoeffizienten auf, der niedriger ist als der Reibungskoeffizient des ersten und/oder zweiten Radialflanschs des Dichtelements gegenüber demselben Reibungspartner. Zusätzlich oder alternativ weist in einer Ausführung der Stützring eine größere axiale Steifigkeit auf als das Dichtelement und/oder ist wenigstens teilweise aus einem Thermoplast, insbesondere PTFE oder dergleichen, hergestellt.

Hierdurch kann der Stützring in einer Ausführung vorteilhaft eine Reibung eines gegenüber der ersten bzw. zweiten Wandung beweglichen Elements, insbesondere eines Stellelements eines erfindungsgemäßen Fluidventils, reduzieren und/oder eine Abstützung verbessern.

Das Fluidventil ist in einer Ausführung ein Fluidsteuerventil, in einer Weiterbildung ein Fluidregelventil.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen, teilweise schematisiert:
- Fig. 1: einen Teil eines Fluidventils eines Kraftfahrzeugs mit einer Dichtungsanordnung mit einem Dichtelement nach einer Ausführung der vorliegenden Erfindung in einem Axialschnitt; und
- Fig. 2: eine Detailvergrößerung des Dichtelements und eines Stützrings der Dichtungsanordnung.

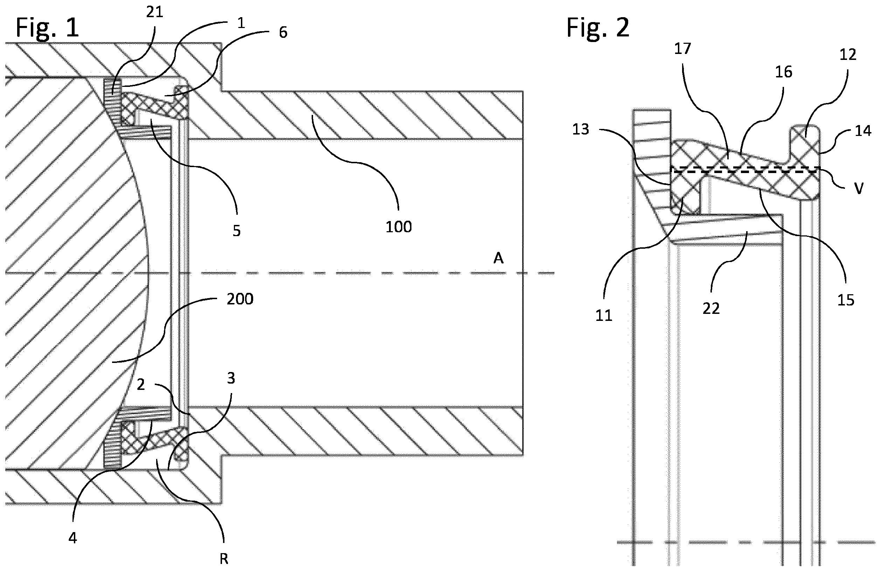

Fig. 1 zeigt einen Teil eines Fluidventils eines Kraftfahrzeugs mit einer Dichtungsanordnung mit einem Dichtelement nach einer Ausführung der vorliegenden Erfindung in einem Axialschnitt.

Das Fluidventil weist ein Gehäuse 100 und ein Stellglied 200 auf, das um eine in Fig. 1 vertikale Achse verdrehbar in dem Gehäuse 100 angeordnet ist.

An dem Stellglied 200 stützt sich in Axialrichtung (horizontal in Fig. 1) ein Stützring 21, 22 ab, der gegen das Gehäuse 100 in Axialrichtung beweglich ist.

Das Dichtelement ist in einem Ringraum R angeordnet, den eine erste Wandung 1 eines Ringflanschs 21 des Stützrings und eine in Axialrichtung (horizontal in Fig. 1) gegenüberliegende zweite Wandung 2 des Gehäuses 100 axial begrenzen. Eine radial innere Wand 4 eines Axialflanschs 22 des Stützrings und eine radial äußere Wand 3 des Gehäuses begrenzen den Ringraum R radial.

Das Dichtelement ist in dem Ringraum R mit Spiel eines ersten Radialflanschs 11 und eines zweiten Radialflanschs 12 in Radialrichtung (vertikal in Fig. 1) quer zur Axialrichtung aufgenommen und in Axialrichtung elastisch verspannt bzw. komprimiert.

Das bezüglich einer zur Axialrichtung parallelen Symmetrieachse A (strichpunktiert in Fig. 1) rotationssymmetrische Dichtelement weist im Axialschnitt einen Z-förmigen Querschnitt auf, der durch den ringförmigen ersten Radialflansch 11, dessen erste Stirnfläche 13 an der ersten Wandung 1 anliegt, den ringförmigen zweiten Radialflansch 12, dessen zweite Stirnfläche 14 an der zweiten Wandung 2 anliegt, und einen kegelstumpfförmigen Mantel 17 gebildet wird, der den ersten und zweiten Radialflansch verbindet und dessen radial innere Oberfläche 15 und radial äußere Oberfläche 16 in Axialrichtung vom ersten zum zweiten Radialflansch (von links nach rechts) jeweils nach radial innen konvergieren.

Dabei erstreckt sich der erste Radialflansch vom Mantel nach radial innen, der zweite Radialflansch vom Mantel nach radial außen.

Wie insbesondere in der Detailvergrößerung der Fig. 2 erkennbar, enthält das Dichtelement einen kreishohlzylinderförmigen Volumenbereich V, der sich von der ersten Stirnfläche 13 bis zu der zweiten Stirnfläche 14 erstreckt.

Sofern zwischen einem radial äußeren Fluidraum 6, der durch die radial äußere Oberfläche 16 des Mantels 17 und die zweite Wandung 2 bzw. den daran anliegenden zweiten Radialflansch 12 begrenzt wird, und einem radial inneren Fluidraum 5, der durch die radial innere Oberfläche 15 des Mantels und die erste Wandung 1 bzw. den daran anliegenden ersten Radialflansch 11 begrenzt wird, keine Druckdifferenz herrscht, dichtet das axial verspannte Dichtelement in seinem in Fig. 1 gezeigten Montagezustand den radial äußeren und inneren Fluidraum 5, 6 gegeneinander bzw. zwischen der ersten und zweiten Wandung 1, 2 gegen Leckage.

Falls in dem radial inneren Fluidraum 5 ein höherer Druck anliegt als in dem radial äußeren Fluidraum 6, drückt dieser Überdruck den Stützring 21, 22 in Axialring von der zweiten Wandung 2 weg (nach links in Fig. 1), was die Dichtwirkung des dazwischen elastisch verspannten Dichtelements reduzieren würde.

Doch beaufschlagt der höhere Druck im radial inneren Fluidraum 5 auch sowohl die der ersten Stirnfläche 13 gegenüberliegende Oberfläche des ersten Radialflansches 11 als auch die radial innere Oberfläche 15 des Mantels.

Dies wirkt der oben erläuterten Reduzierung der Dichtwirkung infolge des auf den Stützring wirkenden Überdrucks entgegen.

Falls umgekehrt in dem radial äußeren Fluidraum 6 ein höherer Druck anliegt als in dem radial inneren Fluidraum 5, beaufschlagt dieser höhere Druck sowohl die der zweiten Stirnfläche 14 gegenüberliegende Oberfläche des zweiten Radialflansches 12 als auch die radial äußere Oberfläche 16 des Mantels, so dass die Dichtwirkung verstärkt wird.

Wird der Ringraum R axial verkürzt bzw. der Stützring 21, 22 in Axialrichtung auf die zweite Wand 2 zu verschoben (nach rechts in Fig. 1), bewirkt der hohlkegelstumpfförmige Mantel 17 unter entsprechender (Ver)Wölbung eine gleitende Radialverschiebung der beiden Radialflansche 11, 12 aufeinander zu (des ersten Radialflansches 11 nach radial außen bzw. des zweiten Radialflansches 12 nach radial innen), die infolge des Radialspiels des Dichtelements im Ringraum R bzw. radial zwischen der radial äußeren und inneren Wand 3, 4 möglich ist.

Dadurch kann ein vorteilhafter Steifigkeitsverlauf der elastischen Reaktionskraft des Dichtelements infolge einer Kompression in Axialrichtung realisiert und so für einen größeren Toleranzbereich eine vorteilhafte Dichtwirkung zur Verfügung gestellt werden.

Gleiche oder gleichwirkende Merkmale sind über alle Figuren hinweg mit denselben Bezugszeichen gekennzeichnet.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Fluidventil, insbesondere Mehrwege- und/oder Kühlwasser-Steuer- oder -Regelventil und/oder für ein Kraftfahrzeug, mit wenigstens einer Dichtungsanordnung zur Abdichtung zwischen einem Gehäuse (100) und einem darin verstellbar, insbesondere verdrehbar, angeordneten Stellglied (200), wobei die Dichtungsanordnung eine erste Wandung (1), eine dieser in einer Axialrichtung gegenüberliegende zweite Wandung (2) und ein Dichtelement aufweist, wobei das Dichtelement zwischen der ersten Wandung (1) und der zweiten Wandung (2) abdichtet,
wobei das Dichtelement einen ersten Radialflansch (11) mit einer ersten Stirnfläche (13), die an der ersten Wandung anliegt,
einen zweiten Radialflansch (12) mit einer zweiten Stirnfläche (14), die an der zweiten Wandung anliegt, und
einen Mantel (17) aufweist, der den ersten und zweiten Radialflansch verbindet,
wobei der erste Radialflansch (11) sich vom Mantel (17) in einer Radialrichtung quer zur Axialrichtung nach radial innen erstreckt,
der zweite Radialflansch (12) sich vom Mantel (17) nach radial außen erstreckt,
eine radial innere Oberfläche (15) des Mantels (17) und eine radial äußere Oberfläche (16) des Mantels (17) in Axialrichtung vom ersten zum zweiten Radialflansch hin jeweils wenigstens abschnittsweise nach radial innen konvergieren, **dadurch gekennzeichnet, dass**
das Dichtelement einen kreishohlzylinderförmigen Volumenbereich (V) enthält, der sich von der ersten Stirnfläche (13) bis zu der zweiten Stirnfläche (14) erstreckt.

2. Fluidventil nach Anspruch 1, wobei der erste und/oder zweite Radialflansch (11, 12) ringartig und/oder die radial innere und/oder äußere Oberfläche (15, 16) wenigstens abschnittsweise kegelstumpfartig ist und/oder der erste und/oder zweite Radialflansch (11, 12) und/oder der Mantel (17) wenigstens abschnittsweise eine konstante und/oder dieselbe Wandstärke aufweist bzw. aufweisen und/oder bezüglich einer zur Axialrichtung parallelen Symmetrieachse rotationssymmetrisch ist.

3. Fluidventil nach einem der vorhergehenden Ansprüche, wobei das Dichtelement elastisch, einstückig und/oder urgeformt ist und/oder wenigstens ein Elastomer, insbesondere EPDM, aufweist.

4. Fluidventil nach einem der vorhergehenden Ansprüche, wobei die erste und zweite Wandung (1, 2) gegeneinander in Axialrichtung und/oder quer zur Axialrichtung beweglich sind und/oder
das Dichtelement wenigstens in einem Betriebszustand, insbesondere bereits in einem Montagezustand, in Axialrichtung elastisch verspannt ist und/oder
die erste und zweite Wandung (1, 2) einen Ringraum (R) axial begrenzen, in dem das Dichtelement mit Spiel des ersten und/oder zweiten Radialflanschs (11, 12) in Radialrichtung zwischen einer radial äußeren und einer radial inneren Wand (3, 4), die den Ringraum radial begrenzen, aufgenommen ist.

5. Fluidventil nach einem der vorhergehenden Ansprüche, mit einem Stützring (21, 22), der die erste oder zweite Wandung (1, 2) und/oder die radial äußere oder innere Wand (3, 4) aufweist.

6. Kraftfahrzeug mit wenigstens einem Fluidventil, nach einem der vorhergehenden Ansprüche.

## Claims

1. Fluid valve, in particular multi-way and/or cooling-water control or regulating valve and/or for a motor vehicle, having at least one seal assembly for sealing between a housing (100) and an actuator (200) that is arranged adjustably, in particular rotatably, therein, wherein the seal assembly has a first wall (1), a second wall (2) located opposite the latter in an axial direction and a seal element, wherein the seal element seals off between the first wall (1) and the second wall (2),
wherein the seal element has a first radial flange (11) with a first end face (13), which bears on the first wall,
a second radial flange (12) with a second end face (14), which bears on the second wall, and
a skirt (17) which connects the first and second radial flange,
wherein the first radial flange (11) extends radially inward from the skirt (17) in a radial direction transverse to the axial direction,
the second radial flange (12) extends radially outward from the skirt (17),
a radially inner surface (15) of the skirt (17) and a radially outer surface (16) of the skirt (17) converge radially inward, in each case at least in some sections, in the axial direction from the first to the second radial flange, **characterized in that**
the seal element contains a circularly hollow cylindrical volume region (V), which extends from the first end face (13) as far as the second end face (14).

2. Fluid valve according to Claim 1, wherein the first and/or second radial flange (11, 12) is ring-like and/or the radially inner and/or outer surface (15, 16) is shaped like a truncated cone, at least in some sections, and/or the first and/or second radial flange (11, 12) and/or the skirt (17) has or have a constant and/or the same wall thickness, at least in some sections, and/or is rotationally symmetrical with respect to an axis of symmetry that is parallel to the axial direction.

3. Fluid valve according to one of the preceding claims, wherein the seal element is elastic, made in one piece and/or primary-formed and/or has at least one elastomer, in particular EPDM.

4. Fluid valve according to one of the preceding claims, wherein the first and second wall (1, 2) are movable toward each other in the axial direction and/or transversely to the axial direction and/or
the seal element is elastically preloaded in the axial direction, at least in one operating state, in particular already in an assembled state, and/or
the first and second wall (1, 2) delimit an annular chamber (R) axially, in which the seal element is accommodated with play of the first and/or second radial flange (11, 12) in the radial direction between a radially outer and a radially inner wall (3, 4), which delimit the annular chamber radially.

5. Fluid valve according to one of the preceding claims, having a supporting ring (21, 22), which has the first or second wall (1, 2) and/or the radially outer or inner wall (3, 4).

6. Motor vehicle having at least one fluid valve according to one of the preceding claims.

## Revendications

1. Soupape à fluide, notamment soupape de commande ou de régulation à plusieurs voies et/ou à eau de refroidissement et/ou pour un véhicule automobile, avec au moins un agencement d'étanchéité pour assurer l'étanchéité entre un boîtier (100) et un organe de réglage (200) agencé de manière réglable, notamment de manière rotative, dans celui-ci, l'agencement d'étanchéité présentant une première paroi (1), une deuxième paroi (2) opposée à celle-ci dans une direction axiale et un élément d'étanchéité, l'élément d'étanchéité assurant l'étanchéité entre la première paroi (1) et la deuxième paroi (2),
l'élément d'étanchéité présentant une première bride radiale (11) avec une première surface frontale (13) qui s'appuie sur la première paroi,
une deuxième bride radiale (12) avec une deuxième surface frontale (14) qui s'appuie sur la deuxième paroi, et une enveloppe (17) qui relie la première et la deuxième bride radiale,
la première bride radiale (11) s'étendant radialement vers l'intérieur à partir de l'enveloppe (17) dans une direction radiale transversale à la direction axiale,
la deuxième bride radiale (12) s'étendant radialement vers l'extérieur à partir de l'enveloppe (17),
une surface radialement intérieure (15) de l'enveloppe (17) et une surface radialement extérieure (16) de l'enveloppe (17) convergeant chacune au moins par sections radialement vers l'intérieur dans la direction axiale de la première à la deuxième bride radiale, **caractérisée en ce que**
l'élément d'étanchéité contient une zone de volume en forme de cylindre creux circulaire (V) qui s'étend de la première surface frontale (13) à la deuxième surface frontale (14).

2. Soupape à fluide selon la revendication 1, dans laquelle la première et/ou la deuxième bride radiale (11, 12) sont annulaires et/ou la surface radialement intérieure et/ou extérieure (15, 16) sont tronconiques au moins par sections et/ou la première et/ou la deuxième bride radiale (11, 12) et/ou l'enveloppe (17) présentent au moins par sections une épaisseur de paroi constante et/ou identique et/ou sont symétriques en rotation par rapport à un axe de symétrie parallèle à la direction axiale.

3. Soupape à fluide selon l'une quelconque des revendications précédentes, dans laquelle l'élément d'étanchéité est élastique, d'un seul tenant et/ou moulé de manière primaire et/ou présente au moins un élastomère, notamment de l'EPDM.

4. Soupape à fluide selon l'une quelconque des revendications précédentes, dans laquelle la première et la deuxième paroi (1, 2) sont mobiles l'une par rapport à l'autre dans la direction axiale et/ou transversalement à la direction axiale, et/ou
dans laquelle l'élément d'étanchéité est élastiquement contraint dans la direction axiale au moins dans un état de fonctionnement, notamment déjà dans un état de montage, et/ou
la première et la deuxième paroi (1, 2) délimitent axialement un espace annulaire (R) dans lequel l'élément d'étanchéité est logé avec un jeu de la première et/ou de la deuxième bride radiale (11, 12) dans la direction radiale entre une paroi radialement extérieure et une paroi radialement intérieure (3, 4) qui délimitent radialement l'espace annulaire.

5. Soupape à fluide selon l'une quelconque des revendications précédentes, avec un anneau de support (21, 22) qui présente la première ou la deuxième paroi (1, 2) et/ou la paroi radialement extérieure ou intérieure (3, 4).

6. Véhicule automobile avec au moins une soupape à fluide, selon l'une quelconque des revendications précédentes.
